# EUROPEAN PATENT APPLICATION

(11) **EP 2 320 390 A1**
(43) Date of publication of application: **11.05.2011**
(21) Application number: 09380175.1
(22) Date of filing: 10.11.2009
(51) Int. Cl.: G07D 7/20

(54) **Method and system for reading and validation of identity documents**

(71) Applicant: Icar Vision Systems, SL, 08290 Cerdanyola del Vallès, Barcelona (ES)
(72) Inventor: Cañero Morales, Cristina, 08172 Sant Cugat del Vallès (ES); Costa Montmany, Eva, 08551 Tona (Barcelona) (ES); Chapaprieta Martínez, Vicente, 08042 Barcelona (ES); López Pérez, Jordi, 08550 Balenya (Barcelona) (ES); Codó Grasa, Xavier, 08401 Granollers(Barcelona) (ES); Lumbreras Ruiz, Felipe, 08193 Barcelona (ES); Lladós Canet, Josep, 08980 Sant Feliu de Llobregat (Barcelona) (ES)
(74) Representative: Gislon, Gabriele

(57) **Abstract**

The method comprises:
a) acquiring an image of a first and/or a second side of an identity document for a visible light spectrum using a camera of a portable device;
b) automatically reading MRZ characters and/or VIZ characters in said acquired image; and
c) identifying the model of said identity document, starting by correcting, before or after said step a), perspective distortions caused by a bad relative position of the identity document with respect to the camera for the purpose of obtaining a corrected and substantially rectangular image of the first and/or second side of the document at a predetermined scale which is used to perform, automatically, said identification of the identity document model and to automatically read and identify text and/or non-text information included in said corrected and substantially rectangular image.

The system is suitable for implementing the proposed method.

## Description

### Field of the Art

In a first aspect, the present invention relates to a method for reading and validating identity documents, and more particularly to a method comprising acquiring an image of an identity document only for a visible light spectrum using a camera of a portable device.

A second aspect of the invention relates to a system for reading and validating identity documents suitable for implementing the method proposed by the first aspect.

### Prior State of the Art

Various proposals are known relating to reading and validating identity documents, which generally use different (visible light, infrared or ultraviolet) light sources for detecting different parts of the document visible under the light emitted by one of said light sources by means of a scanner or other type of detecting device.

One of said proposals is described in Spanish utility model ES 1066675 U, belonging to the same applicant as the present invention, and it relates to a device for the automatic digitalization, reading and authentication of semi-structured documents with heterogeneous contents associated with a system suitable for extracting the information they contain and identifying the document type by means of using a particular software, for the purposes of reading, authenticating and also validating. The device proposed in said utility model provides a transparent reading surface for the correct placement of the document, and an image sensor associated with an optical path and suitable for capturing an image of said document through said transparent reading surface, as well as a light system with at least one light source emitting light in a non-visible spectrum for the human eye. For more elaborate embodiments, the light system proposed in said utility model emits visible, infrared and ultraviolet light.

The image captured by means of the image sensor contains the acquired document perfectly parallel to the plane of the image, and at a scale known by the software implemented by the same, due to the support that the reading surface provides to the document. In addition, the light is perfectly controlled as it is provided by the mentioned light system included in the device proposed in ES 1066675 U.

Document WO2004081649 describes, among others, a method for authenticating identity documents of the type including machine-readable identification marks, or MRZ, with a first component, the method being based on providing MRZ identification marks with a second component in a layer superimposed on the document. The method proposed in said document comprises acquiring an image of the superimposed layer, in which part of the identity document is seen therethrough, machine-reading the second component in the acquired image and "resolving" the first component from the acquired image in relation to the second component.

Generally the second component, and occasionally the first component, comprises a watermark with encoded information, such as an orientation component that can be used to orient the document, or simply information which allows authenticating the document.

Said PCT application also proposes a portable device, such as a mobile telephone, provided with a camera, that is able to act in a normal mode for acquiring images at a greater focal distance and in a close-up mode in which it can acquire images at a shorter distance, generally placing the camera in contact with the object to be photographed, when in the case of documents, for example to scan documents or machine-readable code, such as that included in a watermark.

Said document does not indicate the possibility of authenticating identity documents that do not have the mentioned second layer, which generally comprises encoded information by means of a watermark, or the possibility that said authentication includes reading and validating said kind of documents, including the detection of the type or model to which they belong, but rather it is only based on checking its authenticity using the encoded content in the superimposed watermark.

The authors of the present invention do not know of any proposal relating to the automatic reading and validation of identity documents, including the identification of the document type or model, which is based on the use of an image of the document acquired by means of a camera of a mobile device, under uncontrolled light conditions, and which only includes a visible light spectrum for the human eye.

### Summary of the Invention

Inventors have found necessary to offer an alternative to the state of the art which allows covering the gaps therein and offers an alternative solution to the known systems for reading and validating identity documents using more or less complex devices which, as is the case of ES 1066675 U, are designed expressly for such purpose, to which end they include a plurality of elements, such as different light sources, a support surface for reading the document, etc.

The solution provided by the present invention hugely simplifies the proposals in such type of conventional devices, since it allows dispensing with the mentioned device designed expressly for the mentioned purpose, and it can be carried out using a conventional and commercially available portable device, including a camera, such as a mobile telephone, a personal digital assistant, or PDA, a webcam or a digital camera with sufficient processing capacity.

For such purpose, the present invention relates in a first aspect to a method for reading and validating identity documents, of the type comprising:
a) acquiring an image of a first and/or a second side of an identity document;
b) automatically reading characters of a machine-readable zone, or MRZ characters, and/or characters of a visual inspection zone of the identity document, or VIZ characters, in said acquired image; and
c) identifying the type or model of said identity document from information included in the acquired image.

As indicated, unlike the conventional proposals, in the method proposed by the first aspect of the invention said step a) comprises acquiring said image only for a visible light spectrum using a camera of a portable device, which gives it an enormous advantage because it hugely simplifies implementing the method, with respect to the physical elements used, being able to use, as previously mentioned, a simple mobile telephone incorporating a camera which allows taking photographs and/or video.

Obviously, dispensing with all the physical elements used by conventional devices for assuring control of the different parameters or conditions in which the acquisition of the image of the document is performed, i.e., step a), results in a series of problems relating to the uncontrolled conditions in which step a) is performed, particularly relating to the lighting and to the relative position of the document in the moment of acquiring its image, problems which are minor in comparison with the benefits provided.

The present invention provides the technical elements necessary for solving said minor problems, i.e., those relating to performing the reading and validation of identity documents from an acquired image, not by means of a device which provides a fixed support surface for the document and its own light system, but rather by means of a camera of a mobile device under uncontrolled light conditions, and therefore including only a visible light spectrum, and without offering a support surface for the document which allows determining the relative position and the scale of the image.

According to the first aspect of the invention, such technical elements are materialized in that the mentioned step c) comprises correcting perspective distortions caused by a bad relative position of the identity document with respect to the camera, including distance and orientation, for the purpose of obtaining in the portable device a corrected and substantially rectangular image of the first and/or second side of the identity document at a predetermined scale which is used to, automatically, perform said identification of the identity document model and to read and identify text and/or non-text information included in said corrected and substantially rectangular image.

Corrected image must be understood as that image which coincides or is as similar as possible to an image which is acquired with the identity document arranged completely orthogonal to the focal axis of the camera, i.e., such corrected image is an image which simulates/recreates a front view of the identity document in which the document in the image has a rectangular shape.

Generally, both the acquired image and the corrected image include not only the image of the side of the identity document, but also part of the background in front of which the document is placed when performing the acquisition of step a), so the corrected and substantially rectangular image of the side of the document is included in a larger corrected image including said background surrounding the rectangle of the side of the document.

It is important to point out that the method proposed by the present invention does not use information encoded in any watermark, or any other type of additional element superimposed on the identity document for such purpose, but rather it works with the information already included in official identity documents that are not subsequently manipulated.

Two main forms of carrying out the mentioned correction of perspective distortions are contemplated: a first one in which such correction is generally performed manually before the acquisition of the image, and a second one in which the correction is performed automatically on the already acquired image.

For one embodiment, the method comprises carrying out said correction of perspective distortions according to said first form with respect to the image shown on a display of the portable device prior to performing the acquisition of step a) by adjusting the relative position of the identity document with respect to the camera, including distance and orientation. In other words, the perspective distortions seen by the user in the display of the portable device occur before taking the photograph, so the correction consists of duly positioning the camera, generally a user positioning it, and therefore the portable device, with respect to the identity document, or vice versa.

For carrying out said embodiment in a specific manner by means of the proposed method, the latter comprises correcting said perspective distortions by means of performing the following steps:
- showing on a display of said portable device visual guides associated with respective ID formats of identity documents,
- manually adjusting on said display the image of the identity document to be acquired in relation to one of said visual guides by means of the user moving said portable device or the identity document; and
- carrying out step a) once the image to be acquired is adjusted on the display with said visual guide.

It is thus strongly assured that the image of the document captured by the camera is well positioned, i.e., it corresponds to a photograph taken with the document placed substantially parallel with the plane of the lens of the camera, and it is within a pre-determined scale that is used to perform the identification of the identity document model or type, and it is therefore necessary to obtain the mentioned identification, for example by means of a suitable algorithm or software that implements the automatic steps of the described method.

In this case, i.e., for the embodiment associated with the mentioned first form of carrying out the correction of perspective distortions, steps b) and c) are obviously performed after the correction of perspective distortions and after step a), in any order, or in an interspersed manner, as occurs, for example, if part of the reading performed in b) allows identifying the identity document type or model in c), after which step b) continues to be performed to improve the identification and finally validate the document in question.

According to an alternative embodiment, or complementary if the mentioned correction is to be improved, the method comprises carrying out the correction of perspective distortions according to said second form, i.e. with respect to the image acquired in step a), correcting the geometry of the image by means of the automatic adjustment of the positions of its respective dots or pixels on the image, which positions result from the relative positions of the identity document with respect to the camera, including distance and orientation, at the moment in which its image was acquired. Unlike the embodiment associated with the first indicated form, according to the present embodiment the perspective distortions to be corrected are already manifested in the acquired image, either because the previously described manual adjustment was not performed (in which case both embodiments are alternative embodiments), or because such adjustment was not performed with sufficient precision (in which case both embodiments are complementary embodiments).

Specifying said embodiment described in the previous paragraph, for a first variant for which the image acquired in step a) is an image of a first (or a single) side including said MRZ characters, the method comprises carrying out the correction of perspective distortions after at least part of step b) by means of performing the following steps:
- analyzing some or all of the MRZ characters read in step b), and determining the position thereof on the acquired image (generally the position of the centroids of the MRZ characters) as a result of said analysis;
- comparing the positions of the MRZ characters determined with those of the MRZ characters of at least one candidate identity document model, and determining the perspective distortion that the MRZ characters experience;
- creating a perspective distortions correction function (such as a homography matrix) including correction parameters estimated from the determined perspective distortion of the MRZ characters; and
- applying said perspective distortions correction function to the acquired image (generally to the entire image) to obtain as a result said corrected and substantially rectangular image of the first side of the identity document at a predetermined scale which, as previously explained, is necessary for performing the identification of the identity document model or type.

For this embodiment associated with the mentioned second form of carrying out the correction of perspective distortions, at least part of step b) (the one related to reading the MRZ characters) is performed before the correction of perspective distortions, and step c), which is possible as a result of obtaining the corrected and substantially rectangular image at a known scale, is performed before step b) ends or after having ended, depending on the information read therein and on the identity document to be identified being more or less difficult to identify.

According to a second variant of the mentioned embodiment associated with the second indicated form for the correction of perspective distortions, for which the image acquired in step a) is an image of a side not including MRZ characters (either because the document in question does not include MRZ characters, or because the photograph is being taken of the side in which there are no MRZ characters), the method comprises carrying out the correction of perspective distortions after step a) by means of performing the following steps:
- detecting in the acquired image a series of local points of interest and their positions on the acquired image, and calculating for each detected point of interest one or more descriptors or vectors of local characteristics substantially invariant to changes in scale, orientation, light and affine transformations in local environments;
- comparing the positions of said descriptors on the acquired image with those of reference descriptors of an image of one or more candidate identity document models, and determining the perspective distortion that said descriptors of the acquired image experience;
- creating a perspective distortions correction function including correction parameters estimated from the determined perspective distortion of the descriptors; and
- applying said perspective distortions correction function to the acquired image (generally to the entire image) to obtain as a result said corrected and substantially rectangular image of the side of the identity document the image of which has been acquired, at a predetermined scale enabling said identification of the identity document model of said step c).

The reference descriptors used to perform the described comparison are the result of having performed perspective transformations of the position of the descriptors of the candidate identity document model or models, which correspond to possible identity document models to which the identity document to be identified may belong.

For one embodiment, the method comprises after step c) applying on the corrected and substantially rectangular image obtained a series of filters based on patterns or masks associated with different zones of said corrected and substantially rectangular image and/or on local descriptors to identify a series of global and/or local characteristics, or points of interest, which allow improving the identification of the identity document.

The method comprises using said improvement in the identification of the identity document to improve the correction of the possible perspective distortions caused by a bad relative position of the identity document with respect to the camera which, even though its correction, which has already been described, has allowed identifying the identity document type or model from the obtained corrected and substantially rectangular image and at a known scale, they can still prevent the document from being automatically read and identified completely, including non-text graphic information.

When the identity document to be read and validated is two-sided and the model identification has already been performed in step c), for example, for its first side, for one embodiment, the method comprises correcting possible perspective distortions with respect to its second side, caused by a bad relative position of the identity document with respect to the camera, including distance and orientation, for the purpose of obtaining in the portable device a corrected and substantially rectangular image of the second side of the identity document at a predetermined scale, which allows automatically performing the reading and identification of text and non-text information, similarly or identically to that described in relation to the first side.

In a second aspect, the present invention relates to a system for reading and validating identity documents, comprising:
- an image acquisition unit intended for acquiring an image of a first and/or a second side of an identity document for a visible light spectrum; and
- an electronic system connected with said image acquisition unit for receiving said acquired image, and intended for automatically recognizing and reading characters of a machine-readable zone, or MRZ characters, and characters of a visual inspection zone, or VIZ characters, of the identity document.

The electronic system is intended for identifying the identity document model from information included in the received image, for which purpose it implements suitable algorithms or software.

Unlike conventional systems, the system proposed by the second aspect of the invention comprises a portable device including said image acquisition unit, which is a camera, and at least one display connected with the electronic system for showing the images focused on by the camera and the acquired image.

For one embodiment, said electronic system is placed entirely in the portable device, and for another embodiment, it is only partially placed in same, the rest being placed in a remote computing unit communicated with the portable device (via cable or wirelessly by means of any known technology), either because the portable device does not have sufficient computing resources for carrying out all the functions to be performed, or because due to legal or security reasons, the mentioned remote unit is required (as would be the case of a secure authentication entity or server).

The electronic system comprises means for the correction, or enabling the correction, of perspective distortions caused by a bad relative position of the identity document with respect to the camera, including distance and orientation, for the purpose of obtaining in the portable device a corrected and substantially rectangular image of the first or second side of the identity document at a predetermined scale which is used by the electronic system to perform the identification of the identity document model and to read and identify text and/or non-text information included in said corrected and substantially rectangular image.

The system proposed by the second aspect of the invention implements the method proposed by the first aspect by means of said camera with respect to step a), and by means of the electronic system with respect to the remaining steps of the method performed automatically using suitable software for such purpose.

### Brief Description of the Drawings

The previous and other advantages and features will be better understood from the following detailed description of some embodiments in relation to the attached drawings, which must be interpreted in an illustrative and non-limiting manner, in which:
Figure 1 is a plan view of a mobile device of the system proposed by the second aspect of the invention, in the display of which three visual guides are shown in the form of respective rectangles;
Figures 2a and 2b are respective sides of an identity document with different zones of interest indicated therein by means of rectangles formed by dotted lines; and
Figure 3 is a flow chart showing an embodiment of the method proposed by the first aspect of the invention.

### Detailed Description of some Embodiments

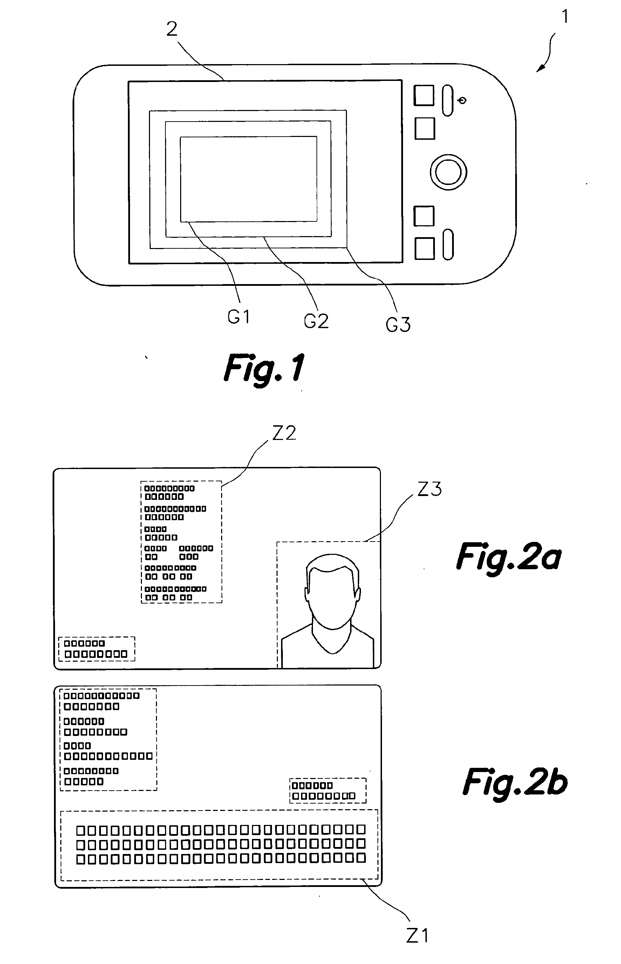

Figure 1 shows the portable device 1 of the system proposed by the second aspect of the invention, in the display 2 of which visual guides are shown in the form of respective rectangles G1, G2, G3, each of them with dimensions corresponding to a certain ID format, including formats ID-1, ID-2 and ID-3 according to regulation ICAO-9303 (ICAO: International Civil Aviation Organization).

By means of said rectangles G1, G2, G3 shown in said display 2, the user can perform the correction of perspective distortions according to the previously described first form, framing the document seen on the display 2 when it is focused on with the camera (not shown) in one of the rectangles G1, G2, G3 arranged for such purpose, and taking the photograph in the moment it is best framed, thus assuring that the acquired image corresponds to a corrected and substantially rectangular image and at a predetermined scale, represented for example in pixels/cm, which the software responsible for processing it needs to know to identify the document type or model.

Figures 2a and 2b show both sides of an identity document, the side of Figure 2b being the one previously referred to as first side including a machine-readable zone, or MRZ, indicated as Z1, in this case formed by three lines of MRZ characters, which have been represented by small rectangles in the same manner that the remaining text information included both on the first side depicted in Figure 2b and on the second side shown Figure 2a has been depicted.

It can be observed in said Figures 2a and 2b that there are different text and non-text zones of interest to be read and validated, some of which have been indicated with references Z1, Z2 and Z3, for example, in relation to Figure 2a, zone Z2 corresponding to a zone including VIZ characters, included on one side of the document not including MRZ characters, which are on the side shown in Figure 2b.

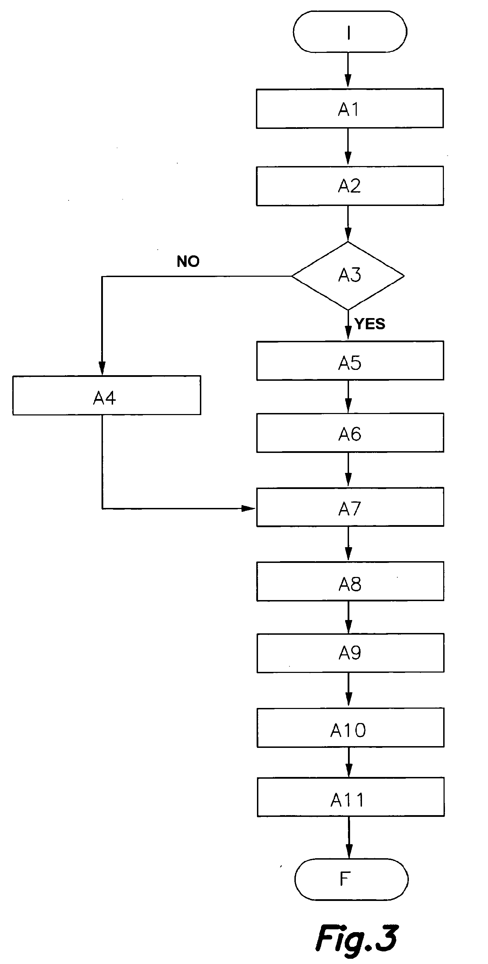

Figure 3 shows a flow chart relating to an embodiment of the method proposed by the first aspect of the invention.

The steps indicated in the different boxes of the diagram, starting with the initial box I to the end box F, are described below.

A1: This box corresponds to the previously described step a) for the acquisition of an image as well as optionally for the detection of the conditions in which said acquisition has occurred, said detection for example carried out by means of an accelerometer installed in the portable device the output signals of which allow improving the correction of perspective distortions, or for example carried out by means of a GPS locator for determining the coordinates of the mobile device for possible subsequent uses.

A2: In this step the MRZ characters in the acquired image are detected and read.

A3: The question indicated by this conditional or decision symbol box poses two possible options: the MRZ characters have been detected and read or they have not.

A4: Passing through this box is mainly due to the fact that the side of the document the image of which has been acquired in A1 does not contain MRZ characters, either because it is a document type that does not contain them anywhere, or because it contains them on the other side. The actions to be performed consist of the previously described detection of local points of interest and corresponding calculation of local descriptors. In this case, a series of comparisons are made, by means of using filters suitable for such purpose, with reference descriptors of dictionaries or of images of one or more candidate identity document models, to find coincidences, not only positional ones, which allow performing a pre-identification of at least the identity document model, to be subsequently validated in step c) of the described method.

A5: If the MRZ characters have been read, the correction of perspective distortions is performed in this step according to the first variant of an embodiment described in a previous section, i.e., from the position of the MRZ characters on the image.

A6: In this step, the identification of the document from the detection and identification of other parts of the acquired image, as previously described, is refined.

A7: This step consists of performing the previously described correction of perspective distortions based on using as a reference the positions of the local descriptors on the image, improving the correction performed in A5 or, if coming from box A4, enabling the identification of step c) which validates the pre-identification made in A4.

A8: The VIZ characters are read in this step at least once the document model has already been identified.

A9: This box consists of performing the validation of the document by means of applying a series of validation tests (checking the control digits of the MRZ, the consistency of dates, the image patterns, etc.) to the read or identified information, including authentication tests.

A10: The user is shown the results of the reading and of the validation, for example through the display 2 of the portable device 1, in this step.

A11: After the mentioned presentation of results, said results are processed, said processing, represented by the present box, consisting of, for example, storing the results in the portable device 1 or in a server, or in automatically sending them to an official authority.

A person skilled in the art could introduce changes and modifications in the described embodiments without departing from the scope of the invention as it is defined in the following claims.

## Claims

1. A method for reading and validating identity documents, of the type comprising:
a) acquiring an image of a first and/or a second side of an identity document;
b) automatically reading characters of a machine-readable zone, or MRZ characters, and/or characters of a visual inspection zone, or VIZ characters, of the identity document in said acquired image; and
c) identifying the model of said identity document from information included in the acquired image,
said method being **characterized in that**:
said step a) comprises acquiring said image only for a visible light spectrum using a camera of a portable device, and **in that** said step c) comprises correcting perspective distortions caused by a bad relative position of the identity document with respect to the camera, including distance and orientation, for the purpose of obtaining, in said portable device, a corrected and substantially rectangular image of said first and/or second side of the identity document at a predetermined scale which is used to, automatically, perform said identification of the identity document model and to, automatically, read and identify text and/or non-text information included in said corrected and substantially rectangular image.

2. The method according to claim 1, **characterized in that** it comprises carrying out said correction of perspective distortions with respect to the image shown on a display of the portable device prior to performing said acquisition of step a) by adjusting the relative position of the identity document with respect to the camera, including distance and orientation.

3. The method according to claim 2, **characterized in that** it comprises carrying out said correction of perspective distortions by means of performing the following steps:
- showing on a display of said portable device visual guides associated with respective ID formats of identity documents,
- manually adjusting on said display the image of the identity document to be acquired in relation to one of said visual guides by means of the user moving said portable device or the identity document;
and **in that** it comprises carrying out said step a) once said image to be acquired is adjusted on said display with said visual guide.

4. The method according to claim 3, **characterized in that** said visual guides are respective rectangles, each of them having dimensions corresponding to a certain ID format, including formats ID-1, ID-2 and ID-3 according to regulation ICAO-9303, said adjustment comprising framing the image to be acquired from the first or second side of the identity document in one of said rectangles on said display.

5. The method according to claim 1, **characterized in that** it comprises carrying out said correction of perspective distortions with respect to the image acquired in said step a), correcting the geometry of the image by means of the automatic adjustment of the positions of its respective points on the image, which positions are derived from the relative positions of the identity document with respect to the camera, including distance and orientation, at the moment in which its image was acquired.

6. The method according to claim 5, **characterized in that** when said image acquired in said step a) is an image of a first side including said MRZ characters, the method comprises carrying out said correction of perspective distortions after at least part of said step b) by means of performing the following steps:
- analyzing at least part of the MRZ characters read in step b), and determining the position thereof on the acquired image as a result of said analysis;
- comparing the determined positions of the MRZ characters with those of the MRZ characters of at least one candidate identity document model, and determining the perspective distortion that the MRZ characters experience;
- creating a perspective distortions correction function including correction parameters estimated from the determined perspective distortion of the MRZ characters; and
- applying said perspective distortions correction function to the acquired image to obtain as a result said corrected and substantially rectangular image of the first side of the identity document at a predetermined scale.

7. The method according to claim 5, **characterized in that** when said image acquired in said step a) is an image of a first or a second side not including said MRZ characters, the method comprises carrying out said correction of perspective distortions after said step a), by means of performing the following steps:
- detecting in said acquired image a series of local points of interest and their positions on the acquired image, and calculating for each detected point of interest one or more descriptors or vectors of local characteristics substantially invariant to changes in scale, orientation, light and affine transformations in local environments;
- comparing at least the positions of said descriptors on the acquired image with those of reference descriptors of at least one image of at least one candidate identity document model, and determining the perspective distortion that said descriptors of the acquired image experience;
- creating a perspective distortions correction function including correction parameters estimated from the determined perspective distortion of the descriptors; and
- applying said perspective distortions correction function to the acquired image to obtain as a result said corrected and substantially rectangular image of the first or the second side of the identity document at a predetermined scale enabling said identification of the identity document model of said step c).

8. The method according to claim 7, **characterized in that** it comprises comparing said descriptors with reference descriptors of dictionaries or of images of one or more candidate identity document models to find coincidences, not only positional ones, which allow making a pre-identification of at least the identity document model, to be subsequently validated in said step c).

9. The method according to any one of the previous claims, **characterized in that** it comprises, after said step c), applying, on said corrected and substantially rectangular image obtained, a series of filters based on patterns or masks associated with different zones of said corrected and substantially rectangular image and/or in local descriptors, to identify a series of global and/or local characteristics, or points of interest, which allow improving the identification of the identity document.

10. The method according to claim 9, **characterized in that** it comprises using said improvement in the identification of the identity document to improve the correction of said possible perspective distortions caused by a bad relative position of the identity document with respect to the camera.

11. The method according to any one of the previous claims, **characterized in that** it comprises also automatically identifying non-text graphic information in said corrected and substantially rectangular acquired or generated image.

12. The method according to any one of the previous claims, **characterized in that** when said model identification has already been performed in said step c) for said first side, the method comprises, with respect to said second side, correcting possible perspective distortions caused by a bad relative position of the identity document with respect to the camera, including distance and orientation, for the purpose of obtaining in said portable device a corrected and substantially rectangular image of said second side of the identity document at a predetermined scale which allows automatically performing said reading and identification of text and non-text information.

13. The method according to any one of the previous claims, **characterized in that** it comprises applying a series of validation tests to the information read or identified, including authentication tests.

14. A system for reading and validating identity documents, of the type comprising:
- an image acquisition unit intended for acquiring an image of a first and/or a second side of an identity document for a visible light spectrum; and
- an electronic system connected with said image acquisition unit for receiving said acquired image, and intended for automatically recognizing and reading at least some characters of a machine-readable zone, or MRZ characters, and characters of a visual inspection zone of the identity document, or VIZ characters;
wherein said electronic system is intended for identifying the model of said identity document from information included in the received image,
said system being **characterized in that**:
- it comprises a portable device (1) including said image acquisition unit, which is a camera, and at least one display (2) connected with said electronic system for showing at least the images focused on by the camera and the acquired image; and **in that**
- said electronic system is at least in part placed in said portable device (1), and comprises means for the correction, or enabling the correction, of perspective distortions caused by a bad relative position of the identity document with respect to the camera, including distance and orientation, for the purpose of obtaining in said portable device (1) a corrected and substantially rectangular image of said first or second side of the identity document at a predetermined scale which is used by said electronic system to perform said identification of the identity document model and to read and identify text and/or non-text information included in said corrected and substantially rectangular image.

15. The system according to claim 14, **characterized in that** it implements the method proposed according to any one of claims 1 to 13 by means of said camera with respect to step a), and by means of the electronic system with respect to the remaining steps of the method performed automatically.
